# EUROPÄISCHE PATENTSCHRIFT

(11) **EP 3 043 883 B1**
(45) Veröffentlichungstag und Bekanntmachung des Hinweises auf die Patenterteilung: **19.07.2017**
(21) Anmeldenummer: 14766422.1
(22) Anmeldetag: 09.09.2014
(51) Int. Cl.: B01D 46/00

(54) **LUFTFILTER**
AIR FILTER
FILTRE À AIR

(30) Priorität: 11.09.2013 DE 102013218219
(43) Veröffentlichungstag der Anmeldung: 20.07.2016
(73) Patentinhaber: Mahle International GmbH, 70376 Stuttgart (DE)
(72) Erfinder: Dressler, Bernd, 70439 Stuttgart (DE); Rhode, Frank, 71394 Kernen (DE); Von Merkatz, Hendrik, 73252 Lenningen (DE)
(74) Vertreter: BRP Renaud & Partner mbB Rechtsanwälte Patentanwälte Steuerberater
(86) Internationale Anmeldenummer: PCT/EP2014/069151
(87) Internationale Veröffentlichungsnummer: WO 2015/036386

(56) Entgegenhaltungen:
- DE-A1- 3 529 579
- DE-A1- 3 936 858
- US-A1- 2004 035 096

## Beschreibung

Die Erfindung betrifft ein Luftfilter, insbesondere ein Fahrgastraumfilter, nach dem Oberbegriff des Anspruchs 1.

Als Luftfilter wird jedweder filternde Abscheider bezeichnet, der Aerosole oder andere unerwünschte Schwebstoffe wie Krankheitserreger, Pollen, Stäube oder Gase aus der Luft zu entfernen vermag. Als Filtermedium oder Kollektor eines gattungsgemäßen Luftfilters kommen typischerweise Fasern oder Körner zur Anwendung.

DE 101 11 318 A1 offenbart eine Filtervorrichtung zur Ausrüstung einer Belüftungs- und/oder Heizungs- und/oder Klimaanlage, insbesondere für Kraftfahrzeuge, die einen Rahmen umfasst, der ein biegsames und verformbares Filtermedium wenigstens teilweise umgibt: Der Rahmen besteht aus einem biegsamen und verformbaren thermoplastischen Elastomer und ist durch Aufformen am Filtermedium befestigt; er umfasst zwei Seitenwände mit geringer Dicke, deren Innenflächen mit Erhebungen versehen sind, die die Längsränder des Filtermediums umgeben.

DE 198 16 238 A1 schlägt eine Versteifungsleiste für ein plattenförmiges Filterelement mit zickzackförmig gefaltetem Filterbahnmaterial vor, die bei einer Wölbbarkeit des Filterelementes für eine gegenseitige Lagefixierung der Falten sorgt. Diesem Zweck soll eine Versteifungsleiste mit folgenden Merkmalen dienen: Die Versteifungsleiste ist in der Form eines Kammes mit einem durchgehenden Längssteg und von diesem ausgehenden Zähnen ausgebildet; die Zähne des Kammes sind zur im Wesentlichen formschlüssigen Aufnahme der Falten des Filterbahnmaterials geeignet; voneinander beabstandete, aus benachbarten Zähnen bestehende Zahnpaare sind als Federklammern für ein kraftschlüssiges Einspannen jeweils einer Falte eines Filterbahnmaterials ausgebildet; der Längssteg der Versteifungsleiste ist in der von den Zähnen aufgespannten Längsebene elastisch biegsam, während er gegen seitliches Ausknicken erheblich biegesteifer ausgebildet ist.

Aus der DE 39 36 858 A1 ist ein Luftfilter bekannt, der einen Faltenbalg mit einem gefalteten, luftdurchlässigen Filtermedium aufweist. Der Luftfilter weist ferner einen Kammring mit einer Vielzahl von Stützzähnen auf, die sämtlich identlisch ausgebildet sind.

Der Erfindung liegt die Aufgabe zugrunde, ein besonders leichtes Luftfilter zu schaffen.

Diese Aufgabe wird durch ein Luftfilter mit den Merkmalen des Anspruchs 1 gelöst.

Die Erfindung fußt demnach auf dem Grundgedanken, den umlaufenden Stützrahmen eines als Filterkörper fungierenden Faltenbalgs in Gestalt eines neuartigen multifunktionalen Bauteils auszuführen, dass im Folgenden wegen seiner zinkenartig aufragenden Stützzähne als "Kammring" bezeichnet werden soll. In ihrer Form und Anordnung entlang des umlaufenden Kammrings sind diese Stützzähne dabei solchermaßen konfiguriert, dass wenigstens ein Stützzahn, insbesondere in Längsrichtung benachbarte Stützzähne, zwei in der Längsrichtung des Faltenbalgs benachbarte Falten in einem vorgegebenen Abstand zu fixieren vermögen.

Um die endseitigen Falten des Balgs mechanisch zu verstärken und insbesondere gegen ein mögliches Durchbiegen unter Belastung zu schützen, kann besagter Kammring zwei quer zu der Faltungsrichtung ausgerichtete Faltenschwerter umfassen, welche zu diesem Zweck in die gegenüberliegenden Endfalten eingesteckt werden. In einer solchen Ausführungsform bietet es sich ferner an, die beschriebenen Stützzähne entlang zweier die Faltenschwerter verbindender Außenbänder anzuordnen. Da bereits die erwähnten Faltenschwerter dem Kammring und somit dem gesamten Luftfilter eine gewisse Biegesteifigkeit in Längsrichtung des Faltenbalgs verleihen, erweist sich in diesem Fall eine biegeschlaffe Ausführung der Außenbänder als hinreichend, um den sicheren Halt sowie die Einhaltung des vorgegebenen Faltenabstands bei unterschiedlichsten Strömungsgeschwindigkeiten des zu filtrierenden Luftstroms zu gewährleisten. Eine gewisse Flexibilität der seitlich des Faltenbalgs verlaufenden Außenbänder mag sich insofern gar als vorteilhaft erweisen, da deren elastische Vorspannkraft ein optimales Anliegen des Kammrings an den Wandungen eines zur Aufnahme des Luftfilters vorgesehenen Montagegehäuses begünstigt und somit etwaigen Leckagen vorbeugt.

Ein zielführender Kompromiss zwischen der angestrebten Gewichtseinsparung einerseits und der erforderlichen Fixation des Faltenbalgs andererseits wird dabei erfindungsgemäß erreicht, indem die Außenbänder des Kammrings eine alternierende Anordnung hoher und niedriger Stützzähne aufweisen. An äquidistanten Knotenpunkten entlang der Außenbänder, beispielsweise an jeder dritten, vierten oder fünften Falte des Balgs, kann in diesem Fall eine Fügestelle vorgesehen sein, um die Verbindung von Faltenbalg und Kammring dauerhaft zu sichern.

Um zu diesem Zweck die molekularen oder atomaren Kräfte der beidseitigen Kontaktflächen zu nutzen, ist hinsichtlich der genannten Fügestellen insbesondere an eine stoffschlüssige Verbindung zwischen Falten und Stützzähnen zu denken, welcher beispielsweise eine Schweißtechnik gemäß DIN 8593-6:2003-09 die gewünschte Festigkeit verleiht. Als vergleichsweise wärmearme Fügetechnik, die Verzug, Abkühlspannungen oder Gefügeveränderungen seitens Faltenbalgs oder Kammrings vermeidet, kommt ferner das in DIN 8593-8:2003-09 normierte Kleben in Betracht.

Empfehlenswert ist in letzterer Variante vor allem die Verwendung einer als Hotmelt bekannten Gruppe von Klebstoffen, welche in der Werkstoffkunde anwendungsspezifisch auch als Schmelzklebstoffe, Heißklebestoffe, Heißkleber oder Heißleime bezeichnet werden. Die geringe Viskosität eines gattungsgemäßen Hotmelts oberhalb seines Schmelzpunkts erlaubt in diesem Fall eine fertigungspraktisch unkomplizierte Benetzung des als Substrat fungierenden Kammrings, während die anschließende Abkühlung des Hotmelts eine dauerhafte Kohäsion einleitet.

Zur Aufnahme etwaiger in Längsrichtung des Faltenbalgs auf das Luftfilter wirkender Druckkräfte bietet sich dessen Ergänzung um eine oder mehrere Stützstreben an, die die gegenüberliegenden Faltenschwerter gegeneinander stabilisieren und die strukturelle Integrität der Anordnung somit zusätzlich stärken. Wird auch eine solche Stützstrebe mit Stützzähnen versehen, wie sie bezüglich der Außenbänder bereits erläutert wurden, so gestattet sie zugleich eine verbesserte Fixation der Falten.

Die Position der Falten kann schließlich mittels eines den Faltenbalg umschließenden Gurtbandes gesichert werden, wobei sich zu diesem Zweck eine hinter der Höhe des Faltenbalgs zurückbleibende Gurtbreite als hinreichend erweist. Verbleibende seitliche Öffnungen des Faltenbalgs lassen sich schließlich mithilfe eines umlaufenden Dichtbands verschließen, welches funktionsgemäß aus einem luftundurchlässigen Dichtmedium zu fertigen ist. Eine alternative Nutzung dieser Öffnungen als Abläufe für Kondenswasser erweist sich insofern zumeist als entbehrlich.

Die beschriebene Ausgestaltung erlaubt es, den als Stützrahmen dienenden Kammring mit einer Wandstärke von weniger als 1,0 mm, zumindest aber weniger als 1,5 mm, auszuführen, ohne die Formstabilität des Luftfilters übermäßig zu gefährden. Eine solche Beschaffenheit lässt sich beispielsweise im Wege des Spritzgießens realisieren, mittels dessen nach dem Stand der Technik bereits Werkstücke im Gewichtsbereich von wenigen Zehntelgramm als herstellbar gelten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: die perspektivische Ansicht eines Luftfilters gemäß einer Ausführungsform der Erfindung,
- Fig. 2: eine Figur 1 entsprechende Explosionsdarstellung des erfindungsgemäßen Luftfilters,
- Fig. 3: die vergrößerte Detaildarstellung des Luftfilters in einem ersten Randbereich,
- Fig. 4: die vergrößerte Detaildarstellung des Luftfilters in einem zweiten Randbereich und
- Fig. 5: eine Figur 4 entsprechende Detaildarstellung des mittels eines Gurtbands gesicherten Luftfilters.

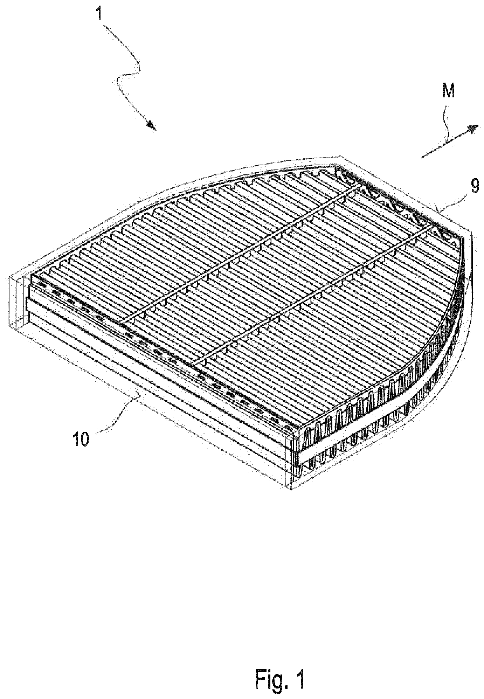

Die perspektivische Darstellung der Figur 1 gibt ein erfindungsgemäßes Luftfilter 1 in seinem montagebereiten Endzustand wieder, welcher auf die korrespondierende Grundform eines in Figur 1 nicht gezeigten Montagegehäuses angepasst ist. Insofern erlaubt die sich in der vorgesehenen Montage-Richtung M verjüngende Form des Luftfilters 1 sowie dessen dem Betrachter abgewandte stirnseitige Anlagefläche 9 das Einschieben des Luftfilters 1 durch einen Verschlussdeckel des Gehäuses, bis die Anlagefläche 9 an der Stirnseite des Gehäuses formschlüssig anliegt.

In dieser Endlage ist das Luftfilter 1 bis zu seiner - parallel zur stirnseitigen Anlagefläche 9 auf der gemäß Figur 1 dem Betrachter zugewandten Seite des Luftfilters 1 angeordneten - deckelseitigen Anlagefläche 10 in das Montagegehäuse eingeschoben, sodass der Verschlussdeckel vom Monteur hinter dem Luftfilter 1 geschlossen werden kann, während das in der Längsrichtung L weitgehend drucksteife Luftfilter 1 die durch das Schließen des Deckels ausgeübte Druckkraft aufnimmt.

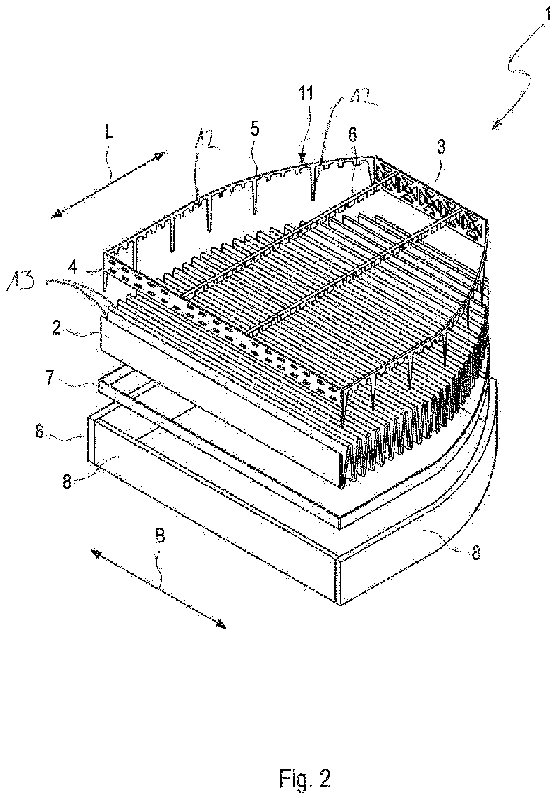

Wie genau diese Drucksteifigkeit des Luftfilters 1 in seiner der Montage-Richtung M entsprechenden Längsrichtung L gemäß der erfindungsgemäßen Leichtbauweise zu realisieren ist, verdeutlicht die Explosionsdarstellung der Figur 2. Erkennbar ist nunmehr der in der Längsrichtung L gefaltete Faltenbalg 2, dessen Faltenkanten somit in der quer zur Längsrichtung L verlaufenden Querrichtung B orientiert sind. Besonderes Augenmerk kommt dabei dem skelettartigen Kammring 11 zu, welcher den Faltenbalg 2 im Wesentlichen vollständig umläuft und dessen Falten 13 mittels einer Vielzahl von Stützzähnen 12 in ihrer vorgesehenen Lage fixiert.

Ein den Faltenbalg 2 ebenfalls umlaufendes Gurtband 7, welches seinerseits von einem luftundurchlässigen Dichtband 8 eingeschlossen wird, sichert die gezeigte Baugruppe zusätzlich. Es versteht sich, dass eine alternative, in den Abbildungen nicht gezeigte Ausführungsform eines Luftfilters 1 um den Preis der zusätzlichen Lagesicherung beziehungsweise Abdichtung auf die Verwendung des Gurtbandes 7, des Dichtbandes 8 oder gar beider Bänder 7, 8 verzichten mag, ohne den Rahmen der Erfindung zu verlassen.

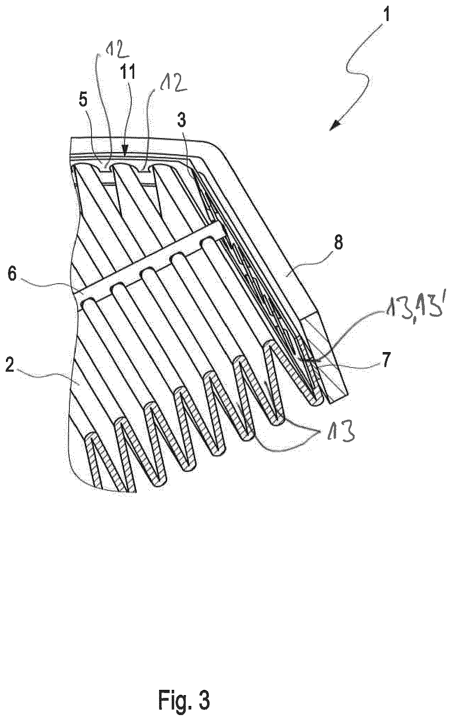

Figur 3 zeigt den vergrößerten Rand des Luftfilters 1 im Bereich seines stirnseitigen Faltenschwerts 3, welches zur mechanischen Verstärkung einer Endfalte 13' in selbige eingesteckt ist. Entsprechend der perspektivischen Ansicht der Figur 1 ist das Luftfilter 1 nunmehr abermals in seinem montagebereiten Endzustand dargestellt, wobei jedoch das umlaufende Dichtband aus Gründen der Übersichtlichkeit lediglich teiltransparent angedeutet wird. Deutlich wird nun die spezifische Höhe des stirnseitigen Faltenschwerts 3, welche nur knapp hinter jener des Faltenbalgs 2 selbst zurückbleibt, um ein ausreichendes Einführen in dessen Endfalte 13' zu erlauben und dem Kammring die gewünschte Drucksteifigkeit in Längsrichtung L zu verleihen. Die charakteristischen Ausnehmungen des stirnseitigen Faltenschwerts 3, welche nach dem Schema eines Fachwerks die tragende Struktur des Stützrahmens unberührt lassen, führen dabei zu einer beträchtlichen Material- und Gewichtseinsparung und erlauben dem Faltenschwert 3 zugleich eine gewisse Flexibilität und Anpassungsfähigkeit an Unebenheiten des aufnehmenden Gehäuses.

Die vergrößerte Teildarstellung der Figur 3 lässt zudem eine senkrecht zum stirnseitigen Faltenschwert 3 mit diesem verbundene Stützstrebe 6 erkennen, dessen niedrige Stützzähne 12 sich mit engen Ausschnitten zum Festklemmen des Filtermediums abwechseln und das stirnseitige Faltenschwert 3 somit bei der Aufnahme in Längsrichtung L auftretender Druckkräfte unterstützen.

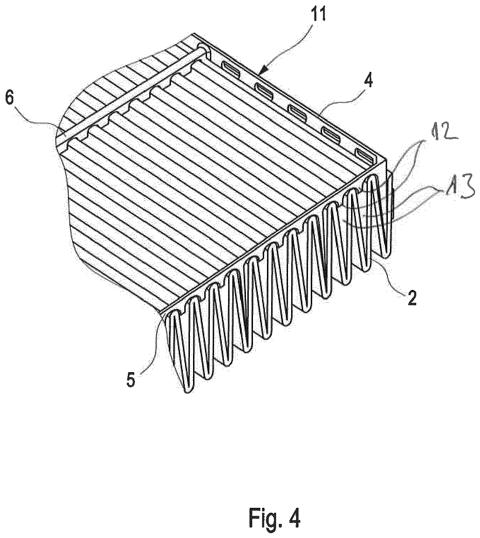

Wie der Figur 4 zu entnehmen ist, verbindet diese Stützstrebe 6 das stirnseitige Faltenschwert 3 der Figur 3 mit einem parallel verlaufenden deckelseitigen Faltenschwert 4, dessen längs des Schwerts 4 verlaufende rinnenförmige Vertiefung - gemäß dem Wirkprinzip einer Verstärkungssicke - die Steifigkeit des Stützrahmens in vorteilhafter Weise erhöht.

Auch die Formgebung des Außenbands 5 ist der vergrößerten Teilansicht gemäß Figur 4 zu entnehmen. Insofern wird eine alternierende Abfolge jeweils drei niedriger Stützzähne 12 mit einem hohen Stützzahn 12 deutlich, wobei jeder Stützzahn 12 zwei benachbarte Falten 13 in einem vorgegebenen Abstand hält. Zur Aufnahme jeder Falte 13 dient dabei ein zwischen zwei benachbarten Stützzähnen 12 gebildeter konkaver Ausschnitt des Außenbandes 5, der gegenüber den erwähnten Ausschnitten der Stützstrebe größer ausfällt, um eine seitliche Verschiebung der Falten 13 in gewissen Grenzen zu ermöglichen. Eine Vielzahl zwischen dem Außenband 5 und den Falten 13 vorgesehener, in Figur 4 nicht erkennbarer Fügestellen verbindet die Falten 13 dennoch punktuell mit dem Außenband 5 und dient so dessen Lagesicherung.

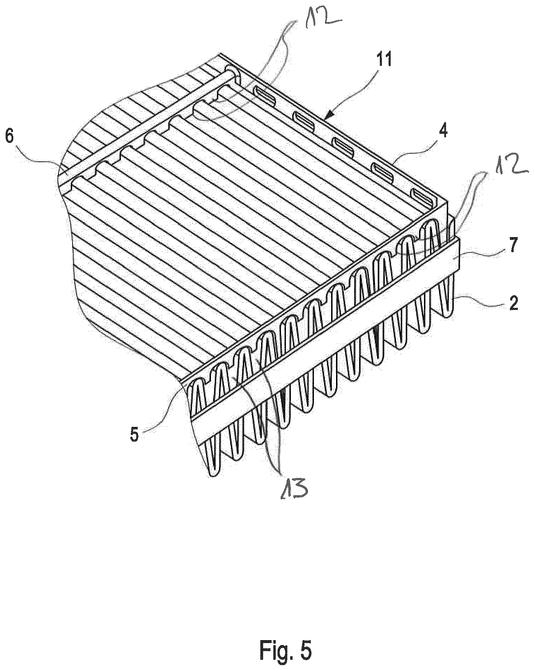

Die Sicherungsfunktion des Kammrings 11 wird zusätzlich durch das in Figur 5 dargestellte umlaufende Gurtband 7 unterstützt, dessen Breite zugunsten der Gewichtseinsparung die Faltenhöhe erkennbar unterschreitet. Diese zusätzliche Verstärkung erlaubt eine besonders dünnwandige Ausführung des Kammrings 11 beispielsweise in Spritzgusstechnik, wobei sich eine Wandstärke von weniger als 1,0 mm, zumindest aber im Bereich unterhalb von 1,5 mm, anwendungsabhängig als ausreichend erweist. Die angestrebte geringe Wandstärke kann es dabei erfordern, den verflüssigten, in aller Regel polymeren Werkstoff an mehreren Positionen in ein entsprechendes Spritzgießwerkzeug einzuspritzen, um dessen gleichmäßige Verteilung innerhalb der Form zu gewährleisten. Alternative Ausführungsformen mögen sich als Werkstoff beispielsweise einer Kartonage oder eines geeigneten Pressguts bedienen, ohne den Rahmen der Erfindung zu verlassen.

## Patentansprüche

1. Luftfilter (1), insbesondere Fahrgastraumfilter,
- mit einem Faltenbalg (2) aus einem in einer Längsrichtung (L) gefalteten luftdurchlässigen Filtermedium zum Filtrieren von Luft und
- mit einem den Faltenbalg (2) umlaufenden Stützrahmen zum Stützen des Faltenbalges (2),
- wobei der Stützrahmen ein im Wesentlichen geschlossener Kammring (11) mit einer Vielzahl von Stützzähnen (12) ist, derart beschaffen, dass wenigstens zwei in Längsrichtung (L) benachbarte Stützzähne (12) zwei in der Längsrichtung (L) benachbarte Falten (13) des Faltenbalgs (2) in einem vorgegebenen Abstand fixieren,
- wobei der Kammring (11) zwei in einer quer zu der Längsrichtung (L) verlaufenden Querrichtung (B) in jeweils eine Endfalte (13') des Faltenbalgs (2) eingesteckte Faltenschwerter (3, 4) und zwei die Faltenschwerter (3, 4) verbindende Außenbänder (5) umfasst, welche die Stützzähne (12) aufweisen,
**dadurch gekennzeichnet,**
**dass** die Außenbänder (5) hohe Stützzähne (12) und niedrige Stützzähne (12) aufweisen.

2. Luftfilter nach Anspruch 1,
**gekennzeichnet durch**
eine Vielzahl von Fügestellen zwischen den Außenbändern (5) und den Falten (13), wobei die Außenbänder (5) an den Fügestellen vorzugsweise stoffschlüssig mit den Falten (13) verbunden, insbesondere verschweißt oder mittels eines Hotmelts verklebt sind.

3. Luftfilter nach Anspruch 1 oder 2,
**gekennzeichnet durch**
mindestens eine die Faltenschwerter (3, 4) verbindende, in der Längsrichtung (L) ausgerichtete Stützstrebe (6), welche weitere Stützzähne (12) aufweist.

4. Luftfilter nach einem der Ansprüche 1 bis 3,
**gekennzeichnet durch**
ein den Faltenbalg (2) umschließendes Gurtband (7) mit einer Breite, welche eine Faltenhöhe des Faltenbalgs (2) unterschreitet.

5. Luftfilter nach Anspruch 4,
**gekennzeichnet durch**
ein das Gurtband (7) umlaufendes Dichtband (8) aus einem luftundurchlässigen Dichtmedium zum Abdichten des Luftfilters (1).

6. Luftfilter nach Anspruch 5,
**dadurch gekennzeichnet, dass**
das Dichtband (8) eine stirnseitige Anlagefläche (9) und eine deckelseitige Anlagefläche (10) aufweist, sodass, wenn das Luftfilter (1) gemäß einer der Längsrichtung (L) entsprechenden Montage-Richtung (M) in einem Gehäuse mit einer Stirnplatte und einem Verschlussdeckel montiert wird, die stirnseitige Anlagefläche (9) an der Stirnseite und die deckelseitige Anlagefläche (10) an dem Verschlussdeckel anliegt.

7. Luftfilter nach einem der Ansprüche 1 bis 6,
**dadurch gekennzeichnet, dass**
der Kammring (11) eine Wandstärke von weniger als 1,5 mm, vorzugsweise weniger als 1,0 mm aufweist.

8. Luftfilter nach einem der Ansprüche 1 bis 7,
**dadurch gekennzeichnet, dass**
der Kammring (11) ein Thermoplast, eine Kartonage oder ein Pressgut enthält.

## Claims

1. An air filter (1), in particular a passenger compartment filter,
- with a bellows (2) made of an air-permeable filter medium, which is folded in a longitudinal direction (L), for filtering air, and
- with a supporting frame, which surrounds the bellows (2), for supporting the bellows (2),
- wherein the supporting frame is a substantially closed comb-like ring (11) having a plurality of supporting teeth (12), designed in such a way that at least two supporting teeth (12) that are adjacent in the longitudinal direction (L) fix two folds (13) of the bellows (2) which are adjacent in the longitudinal direction (L) at a predefined distance from each other,
- wherein the comb-like ring (11) comprises two fold blades (3, 4) inserted in a transverse direction (B) running transversely to the longitudinal direction (L) into respectively an end fold (13') of the bellows (2), and two outer bands (5) connecting the fold blades (3, 4), which outer bands have the supporting teeth (12),
**characterized in that**
the outer bands (5) have high supporting teeth (12) and low supporting teeth (12).

2. The air filter according to Claim 1,
**characterized by**
a plurality of joining points between the outer bands (5) and the folds (13), wherein the outer bands (5) are connected at the joining points preferably in a firmly bonded manner with the folds (13), in particular welded or bonded by means of a hot melt.

3. The air filter according to Claim 1 or 2,
**characterized by**
at least one supporting strut (6), aligned in the longitudinal direction (L), connecting the fold blades (3, 4), which supporting strut has further supporting teeth (12).

4. The air filter according to one of Claims 1 to 3,
**characterized by**
a belt band (7), surrounding the bellows (2), with a width which falls short of a fold height of the bellows (2).

5. The air filter according to Claim 4,
**characterized by**
a sealing band (8) of a sealing medium impermeable to air, running around the belt band (7), for sealing the air filter (1).

6. The air filter according to Claim 5,
**characterized in that**
the sealing band (8) has a contact surface (9) on the end face and a contact surface (10) on the cover side, so that, when the air filter (1) is mounted according to a mounting direction (M), corresponding to longitudinal direction (L), in a housing with an end plate and a closure cover, the contact surface (9) on the end side lies against the end side and the contact surface (10) on the cover side lies against the closure cover.

7. The air filter according to one of Claims 1 to 6,
**characterized in that**
the comb-like ring (11) has a wall thickness of less than 1.5 mm, preferably less than 1.0 mm.

8. The air filter according to one of Claims 1 to 7,
**characterized in that**
the comb-like ring (11) contains a thermoplast, a cardboard or a pressed material.

## Revendications

1. Filtre à air (1), en particulier filtre d'habitacle,
- avec un soufflet (2) en un milieu filtrant perméable à l'air plié dans une direction longitudinale (L) pour le filtrage de l'air et
- avec un cadre support périphérique du soufflet (2) pour supporter le soufflet (2),
- dans lequel le cadre support est un anneau de peigne (11) sensiblement fermé avec une pluralité de dents support (12), conçu de telle sorte qu'au moins deux dents support (12) adjacentes dans la direction longitudinale (L) fixent deux plis (13) adjacents dans la direction longitudinale (L) du soufflet (2) à une distance prédéfinie ;
- dans lequel l'anneau de peigne (11) comprend deux épées de pliage (3, 4) insérées dans une direction transversale (B) s'étendant transversalement à la direction longitudinale (L) dans respectivement un pli final (13') du soufflet (2) et deux bandes extérieures (5) reliant les épées de pliage (3, 4), lesquelles présentent les dents support (12),
**caractérisé en ce**
**que** les bandes extérieures (5) présentent des dents support (12) hautes et des dents support (12) basses.

2. Filtre à air selon la revendication 1,
**caractérisé par**
une pluralité de joints entre les bandes extérieures (5) et les plis (13), dans lequel les bandes extérieures (5) sont reliées au niveau des joints de préférence par correspondance de matière avec les plis (13), en particulier soudées ou collées au moyen d'un thermofusible.

3. Filtre à air selon la revendication 1 ou 2,
**caractérisé par**
au moins une entretoise support (6) orientée dans la direction longitudinale (L), reliant les épées de pliage (3, 4) qui présente d'autres dents support (12).

4. Filtre à air selon l'une quelconque des revendications 1 à 3,
**caractérisé par**
une sangle (7) entourant le soufflet (2) d'une largeur qui est inférieure à une hauteur de pli du soufflet (2).

5. Filtre à air selon la revendication 4,
**caractérisé par**
une bande d'étanchéité (8) périphérique de la sangle (7) en un milieu filtrant imperméable à l'air pour étanchéifier le filtre à air (1).

6. Filtre à air selon la revendication 5,
**caractérisé en ce que**
la bande d'étanchéité (8) présente une surface d'appui côté avant (9) et une surface d'appui côté couvercle (10), de sorte que lorsque le filtre à air (1) est monté conformément à une direction de montage (M) correspondant à la direction longitudinale (L) dans un boîtier avec une plaque frontale et un couvercle de fermeture, la surface d'appui côté avant (9) s'appuie contre le côté avant et la surface d'appui côté couvercle (10) contre le couvercle de fermeture.

7. Filtre à air selon l'une quelconque des revendications 1 à 6,
**caractérisé en ce que**
l'anneau de peigne (11) présente une épaisseur de paroi inférieure à 1,5 mm, de préférence inférieure à 1,0 mm.

8. Filtre à air selon l'une quelconque des revendications 1 à 7,
**caractérisé en ce que**
l'anneau de peigne (11) contient un thermoplastique, un carton ou un produit pressé.
